(19) Europäisches Patentamt
European Patent Office
Office européen des brevets

(11) Veröffentlichungsnummer: **0 040 173**
B1

(12) **EUROPÄISCHE PATENTSCHRIFT**

(45) Veröffentlichungstag der Patentschrift: **27.07.83**

(51) Int. Cl.[3]: **C 09 B 43/38,** C 09 B 33/147 // C08K5/23

(21) Anmeldenummer: **81810165.1**

(22) Anmeldetag: **30.04.81**

(54) **Disazopigment, Verfahren zu dessen Herstellung und Verwendung.**

(30) Priorität: **07.05.80 CH 3552/80**

(43) Veröffentlichungstag der Anmeldung: **18.11.81 Patentblatt 81/46**

(45) Bekanntmachung des Hinweises auf die Patenterteilung. **27.07.83 Patentblatt 83/30**

(84) Benannte Vertragsstaaten: **CH DE FR GB IT LI**

(56) Entgegenhaltungen:
**CH-A-488 786**
**DE-A-1 644 111**
**FR-A-1 574 354**
**FR-A-1 574 355**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Patentabteilung Postfach, CH-4002 Basel (CH)**

(72) Erfinder: **Ronco, Karl, Dr., In der Au 11, CH-4125 Riehen (CH)**

**EP 0 040 173 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Disazopigment, Verfahren zu dessen Herstellung und Verwendung

Die Erfindung betrifft das Disazopigment der Formel

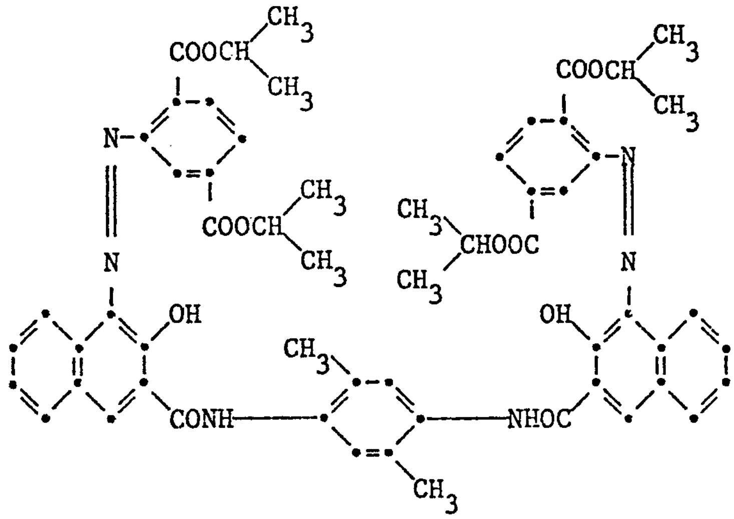

(I)

Man erhält sie vorzugsweise durch Kondensation des Säurechlorids der Formel

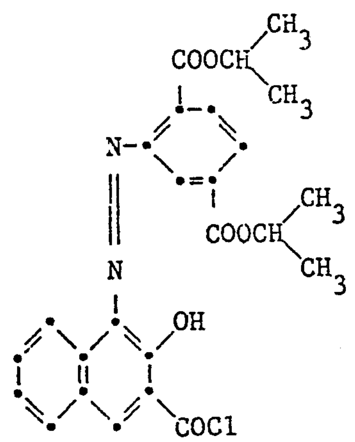

(II)

mit 2,5-Dimethyl-1,4-phenylendiamin im Molverhältnis 2 : 1.

Das Säurechlorid der Formel (II) erhält man durch Kuppeln von diazotiertem Aminoterephthalsäurediisopropylester mit 2,3-Hydroxynaphthoesäure und Behandeln der erhaltenen Azofarbstoffcarbonsäure mit säurechlorierenden Mitteln, wie Phosphortrichlorid, Phosphoroxychlorid oder insbesondere Thionylchlorid. Die Behandlung mit den säurechlorierenden Mitteln wird zweckmäßig in differenten organischen Lösungsmitteln, wie Dimethylformamid, Chlorbenzolen, z. B. Mono- oder Dichlorbenzol, Toluol, Xylol oder Nitrobenzol, höheralkylierten aromatischen Kchlenwasserstoffen durchgeführt, bei den sechs letztgenannten gegebenenfalls unter Zusatz von Dimethylformamid. Bei der Herstellung des Carbonsäurechlorides ist es zweckmäßig, die in wäßrigem Medium hergestellte Azoverbindung vorerst zu trocknen oder durch Kochen in einem organischen Lösungsmittel azeotrop von Wasser zu befreien. Diese azeotrope Trocknung kann gewünschtenfalls unmittelbar vor der Behandlung mit den säurehalogenierenden Mitteln vorgenommen werden.

Die Kondensation zwischen dem Carbonsäurechlorid mit dem 2,5-Dimethyl-1,4-phenylendiamin wird zweckmäßig in wasserfreiem Medium durchgeführt. Sie erfolgt bei Temperaturen, die im Siedebereich normaler organischer Lösungsmittel wie Toluol, Monochlorbenzol, Dichlorbenzol, Trichlorbenzol, Nitrobenzol, höheralkylierten aromatischen Kohlenwasserstoffen, und ähnlichen liegen. Zur Beschleunigung der Umsetzung empfiehlt es sich, ein säurebindendes Mittel wie wasserfreies Natriumacetat, Pyridin oder N,N-Diäthylanilin zu verwenden. Das erhaltene Pigment wird in sehr guter Ausbeute und reinem Zustand erhalten. Es ist zweckmäßig, das aus der Carbonsäure erhaltene Säurechlorid vorerst abzuscheiden.

Dank seiner Unlöslichkeit kann das erhaltene Pigment aus den Reaktionsgemischen durch Abfiltrieren isoliert werden.

Das Pigment der Formel (I) erhält man auch durch Kuppeln von diazotiertem Aminoterephthalsäurediisopropylester mit 2,5-Dimethyl-1,4-bis-(2'-Hydroxy-3'-naphthoylamino)-benzol im Molverhältnis 2 : 1. Die Kupplung wird vorzugsweise in der Weise vollzogen werden, daß man das zu diazotierende Amin mit der Kupplungskomponente im Molverhältnis 2 : 1 in einem organischen Lösungsmittel suspendiert und mit einem diazotierenden Mittel, insbesondere einem Ester der salpetrigen Säure, wie Methyl-, Äthyl-, Butyl-, Amylnitrit behandelt.

Das erfindungsgemäße Pigment eignet sich in feinverteilter Form zum Pigmentieren von hochmolekularen Verbindungen, z. B. Celluloseäthern und -estern, wie Äthylcellulose Acetylcellulose, Nitrocellulose, Polyamiden bzw. Polyurethanen oder Polyestern, natürlichen Harzen oder Kunstharzen, z. B. Aminoplasten, insbesondere Harnstoff- und Melamin-Formaldehydharzen, Alkydharzen, Phenoplasten, Polycarbonaten, Polyolefinen, wie Polystyrol, Polyvinylchlorid, Polyäthylen, Polypropylen, Polyacrylnitril, Polyacrylsäureester, thermoplastische oder härtbare Acrylharze, Gummi, Casein, Silikon und Silikonharzen, einzeln oder in Mischungen. Die erwähnten hochmolekularen Verbindungen können als plastische Massen, Schmelzen oder in Form von Spinnlösungen, Lacken oder Druckfarben vorliegen. Je nach Verwendungszweck erweist es sich als vorteilhaft, das Pigment als Toner oder in Form von Präparaten zu verwenden.

Die erhaltenen braunen Färbungen, beispielsweise in Kunststoffen, Fasern und Lacken zeichnen sich durch sehr große Farbstärke, gute Dispergierbarkeit, gute Überlackier-, Migrations-, Hitze-, Licht- und Wetterechtheit sowie durch einen guten Glanz, gutes IR-Remissionsverhalten und insbesondere eine gute Wetterechtheit in Hart-PVC, auch in feiner Präparateform, aus. Gegenüber den im Handel befindlichen organischen Braunpigmenten zeichnen sich die erfindungsgemäßen Pigmente durch eine bessere Wetter- und Lichtechtheit aus. Gegenüber dem im Beispiel 30 der CH-A-488 786 und dem im Beispiel 17 der DE-A-1 644 111 beschriebenen Tetramethylester zeichnen sich die erfindungsgemäßen Tetraisopropylester durch eine bessere Wetterechtheit aus.

In den nachfolgenden Beispielen bedeuten die Teile, sofern nichts anderes angegeben wird, Gewichtsteile, die Prozente Gewichtsprozente, und die Temperaturen sind in Celsiusgraden angegeben.

## Beispiel 1

46,4 Teile der Farbstoffcarbonsäure, die man durch Kuppeln von diazotiertem Aminoterephthalsäure-di-isopropylester mit 2,3-Hydroxynaphthoesäure erhält, werden in 100 Teilen o-Dichlorbenzol aufgeschlämmt. Dann werden 12 Teile Thionylchlorid und 0,5 Teile Dimethylformamid zugegeben und das Gemisch 2 Stunden auf 110° C erhitzt. Die Suspension wird abgekühlt und das ausgefallene reine Säurechlorid abfiltriert, mit Petroläther gewaschen und getrocknet.

48,2 Teile des so hergestellten Azocarbonsäurechlorids und 6,8 Teile 2,5-Dimethyl-1,4-phenylendiamin werden in 600 Teilen 0-Dichlorbenzol eingerührt und auf 140 – 145° erhitzt. Bei dieser Temperatur wird die Reaktionsmasse während 16 Stunden gerührt. Dann wird die Suspension heiß abfiltriert und das erhaltene Produkt nacheinander mit warmem o-Dichlorbenzol, Methanol und Wasser gewaschen und getrocknet. Man erhält 49,5 Teile des braunen, feinkristallinen Pigmentes der Formel I, das sich gut dispergieren läßt.

## Beispiel 2

46,6 Teile der Farbstoffcarbonsäure, die man durch Kuppeln von diazotiertem Aminoterephthalsäure-di-isopropylester mit 2,3-Hydroxynaphthoesäure erhält, werden in 132 Teilen höheralkylierten, aromatischen Kohlenwasserstoffen verrührt und auf 70 – 80° C erwärmt. Dann werden 0,2 Teile Pyridin zugegeben und während 30 Minuten 16,3 Teile Thionylchlorid zugetropft. Man läßt 90 Minuten bei 100 – 110° C nachrühren, kühlt dann auf 10° C, nutscht das kristallin ausgefallene Säurechlorid ab, wäscht einmal mit höher alkylierten aromatischen Kohlenwasserstoffen nach, dann mit Petroläther und trocknet bei 70 – 80° C.

24,2 Teile des so hergestellten Azocarbonsäurechlorids werden in 270 Teilen höheralkylierten aromatischen Kohlenwasserstoffen verrührt. Zur Suspension gießt man eine Lösung von 3,4 Teilen 2,5-Dimethyl-1,4-phenylendiamin in 175 Teilen höheralkylierten, aromatischen Kohlenwasserstoffen. Man erwärmt auf 140° C und läßt 16 Stunden bei 140 – 145° C nachrühren. Das kristallin ausgefallene Pigment wird bei 100° C abfiltriert, mit höheralkylierten aromatischen Kohlenwasserstoffen und anschließend mit Methanol und Wasser gewaschen. Das Pigment wird 16 Stunden bei 80 – 90° C getrocknet. Man erhält 24,3 Teile des braunen, feinkristallinen Pigmentes der Formel I, das sich gut dispergieren läßt.

## Beispiel 3

68 g Polyvinylchlorid-Pulver (Suspensionspolymerisat), 33 g Dioctylphthalat, 2 g Dibutylzinnlaurat,

0,3 g eines Stabilisators auf Phosphatbasis und 0,7 g des nach Beispiel 1 hergestellten Pigmentes werden vermischt und auf dem 160° heißen Mischwalzwerk während 15 Minuten verarbeitet. Anschließend wird auf dem Kalander eine Folie von 0,4 mm Dicke hergestellt. Sie ist in einem braunen Farbton gefärbt. Die Färbung ist hitzebeständig, licht- und migrationsecht.

Beispiel 4

0,2 g des nach Beispiel 1 hergestellten Pigmentes, 1 g Titandioxyd (Rutil) und 100 g LD-Polyäthylengranulat werden in einer Trommel gemischt und das Gemisch anschließend auf dem Mischwalzwerk bei 130° verarbeitet. Die Masse wird heiß zu Platten verpreßt oder in der Strangpresse verformt. Die Platten zeigen einen schönen braunen Farbton von guter Lichtechtheit.

Beispiel 5

0,1 g des nach Beispiel 1 hergestellten Pigmentes, 0,5 g Titandioxyd (Rutil) und 100 g Polypropylengranulat werden in einer Trommel gemischt und das Gemisch anschließend auf dem Mischwalzwerk bei 190° verarbeitet, bis eine homogen gefärbte Mischung vorliegt. Die Masse wird heiß zu Platten von 1 mm verpreßt. Die Platten zeigen einen schönen braunen Farbton von guter Lichtechtheit.

Beispiel 6

100 g stabilisiertes Polyvinylchlorid werden mit 1 g eines durch Salzknetung von 0,5 g Pigment mit 0,5 g eines Kopolymerisates aus 85% Polyvinylchlorid und 15 g Polyvinylacetat erhaltenen Präparates gemischt und 6 Minuten bei 190° gewalzt. Das Walzgut wird manuell bewegt, bis eine gute Pigmentverteilung erzielt wird. Die Masse wird nun unter Druck bei 190–200° in der Form wieder abgekühlt. Die auf diese Weise in einem braunen Farbton eingefärbten Platten zeichnen sich durch eine hohe Wetterechtheit aus.

In der gleichen Weise können aufgehellte wetterechte braune Färbungen von Hrt-PVC erzeugt werden, wenn der Ansatz bei gleichem oder reduziertem Buntpigmentanteil zusätzlich Titandioxyd zugefügt wird.

Beispiel 7

10 g Titandioxyd und 2 g des nach Beispiel 1 hergestellten Pigments werden mit 88 g einer Mischung von 26,4 g Kokosalkydharz, 24,0 g Melamin-Formaldehydharz (50% Festkörpergehalt), 8,8 g Äthylenglykolmonomethyläther und 28,8 g Xylol während 48 Stunden in einer Kugelmühle vermahlen.

Wird dieser Lack auf eine Aluminiumfolie gespritzt, 30 Minuten bei Raumtemperatur vorgetrocknet und dann während 30 Minuten bei 120° eingebrannt, dann erhält man eine Braunlackierung, die sich bei guter Farbstärke durch eine sehr gute Überlackier-, Licht- und Wetterechtheit auszeichnet.

Beispiel 8

4 Teile des fein verteilten Pigments gemäß Beispiel 1 werden in 20 Teilen Lösungsmittel der folgenden Zusammensetzung eingerührt: 50 Teile Solvesso (Gemisch aromatischer Kohlenstoffe), 15 Teile Butylacetat, 5 Teile Ekin II® (Verlaufmittel auf Ketoximbasis), 25 Teile Methyl-Isobutylketon, 5 Teile Silikonöl (1% in Solvesso 150®).

Nach dem die vollständige Feinverteilung erreicht ist (je nach Art des Rührens in ca. 15–60 Minuten), werden die Bindemittel zugesetzt, nämlich 48,3 Teile Baycryl L 530® (Acrylharz) (51% Xylol/Butanol 3 : 1) und 23,7 Teile Maprenal TTX® (Melaminharz) (55% in Butanol).

Nach kurzem Homogenisieren wird der Lack nach üblichen Methoden wie Spritzen und Tauchen oder speziell zur kontinuierlichen Beschichtung von Metallblechen im »Coil-Coating«-Verfahren appliziert und eingebrannt (Einbrennen 30 Minuten, 130°). Die erhaltenen braunen Lackierungen zeichnen sich durch sehr guten Verlauf, hohen Glanz und ausgezeichnete Feinverteilung des Pigmentes, sowie durch ausgezeichnete Wetterechtheiten aus.

**Patentansprüche**

1. Disazopigment der Formel

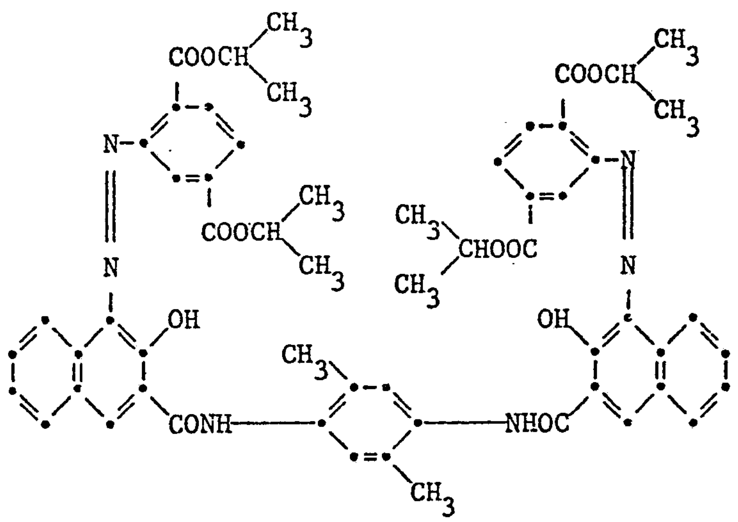

(I) .

2. Verfahren zur Herstellung des Disazopigments gemäß Anspruch 1, dadurch gekennzeichnet, daß man das Säurechlorid der Formel

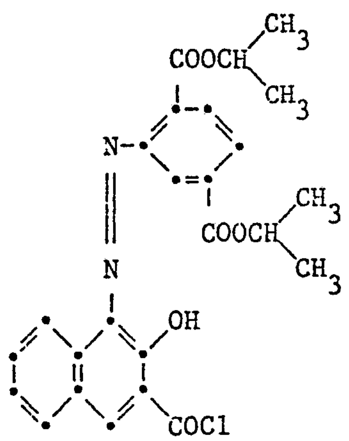

(II)

mit 2,5-Dimethyl-1,4-phenylendiamin im Molverhältnis 2 : 1 kondensiert.

3. Verfahren zum Färben von hochmolekularem organischem Material, gekennzeichnet durch die Verwendung des Disazopigmentes gemäß Anspruch 1.

**Claims**

1. The disazo pigment of the formula

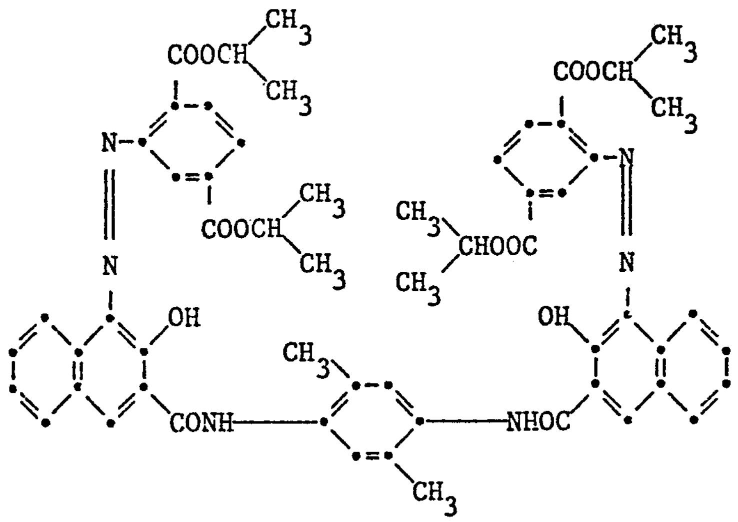

(I)

2. A process for the production of the disazo pigment according to claim 1, which process comprises condensing the acid chloride of the formula

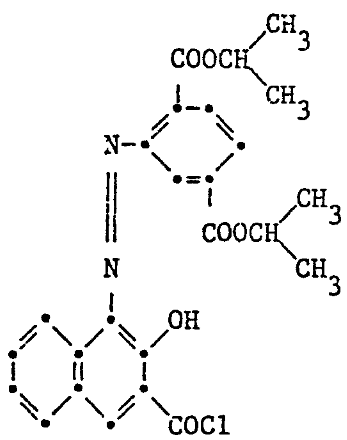

(II)

with 2,5-dimethyl-1,4-phenylenediamine, in the molar ratio 2 : 1.

3. A method of coloring organic material of high molecular weight, which comprises the use of the disazo pigment according to claim 1.

**Revendications**

1. Pigment bis-azoïque qui répond à la formule suivante:

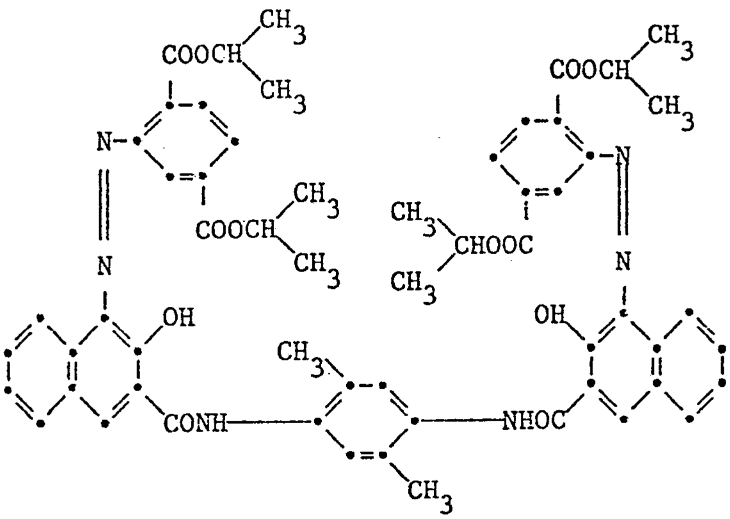

(I)

2. Procédé pour préparer le pigment bis-azoïque conforme à la revendication 1, procédé caractérisé en ce qu'on condense le chlorure d'acide de formule:

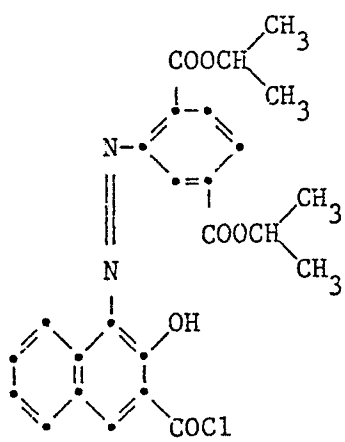

(II)

avec le diamino-1,4 diméthyl-2,5 benzène, dans un rapport molaire égal à 2 : 1.

3. Procédé pour colorer des matières organiques à haut poids moléculaire, procédé caractérisé en ce qu'on utilise le pigment bis-azoïque selon la revendication 1.